# EUROPEAN PATENT APPLICATION

(11) **EP 3 498 757 A1**
(43) Date of publication of application: **19.06.2019**
(21) Application number: 17306817.2
(22) Date of filing: 18.12.2017
(51) Int. Cl.: C08G 69/04, C08G 69/06

(54) **PROCESS FOR THE PREPARATION OF STOICHIOMETRIC DICARBOXYLIC ACID/DIAMINE SALTS AND POLYAMIDES THEREOF**

(71) Applicant: RHODIA OPERATIONS, 75009 Paris (FR)
(72) Inventor: TERNISIEN, Thomas, 69006 Lyon (FR)
(74) Representative: Delenne, Marc

(57) **Abstract**

The present invention relates to a process for preparing a stoichiometric dicarboxylic acid/diamine salt having a solubility in water lower than or equal to 30 % mass at 50°C, by salification from at least one dicarboxylic acid and at least one diamine as monomers, wherein the entire salification reaction occurs in a heterogeneous aqueous medium, in which the quantities of solubilized dicarboxylic acid and of solubilized diamine are maintained at a diacid/diamine molar ratio of 1 ± 0.1, preferably of 1 ± 0.01.

These stoichiometric dicarboxylic acid/diamine salt are suitable for the preparation of polyamide by polycondensation.

## Description

The present invention relates to a novel process for preparing stoichiometric dicarboxylic acid/diamine salts having a low solubility in water, in particular long-chain aliphatic salts and semi-aromatic salts. Such dicarboxylic acid/diamine salts are useful precursors for the synthesis of polyamides by polycondensation.

Polyamides are widely used in various fields, for example in the automobile, electronic, textile or packaging industries. There are several ways for producing polyamides that involve different types of monomers and reactions. A common route for synthesizing aliphatic polyamides, derived only from straight chain monomers, such as PA 6-6, PA 6-10 or PA 6-12, is based on a mass polymerisation between a diamine and a dicarboxylic acid (hereafter called "diacid"). Generally, the two monomers are mixed in a solvent in stoichiometric proportions in order to form a homogenous aqueous solution of dicarboxylic acid/diamine salt, commonly called "nylon salt". The salt is a distinct ionic compound, which is formed through proton exchange, hereafter called "neutralization" or "salification" reaction, between the diamine and the diacid. The salt solution is then heated up while water is being removed gradually, until a highly concentrated aqueous salt solution is obtained, which is further subjected to typical solution-melt polymerization.

For example, these consecutive stages are illustrated below for the production of polyamide PA 6-6:

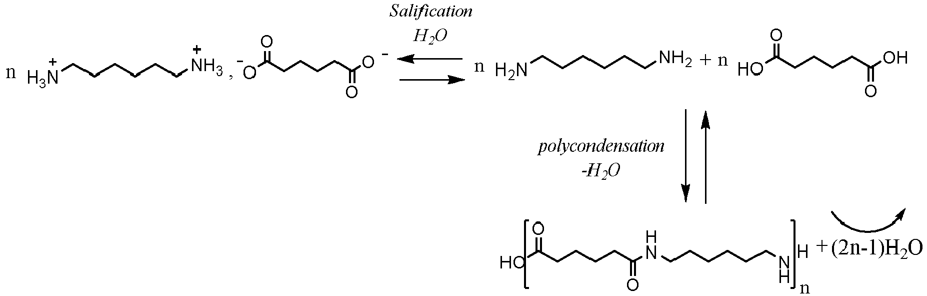

In a further stage, the polymers are transformed appropriately according to the desired application (spinning, injection molding, extrusion or compounding, etc.).

Long-chain aliphatic polyamides and semi-aromatic polyamides are of particular interest in view of their mechanical properties and thermal stability. Semi-aromatic polyamides consist of aliphatic monomers and monomers with aromatic moieties. These materials are often referred to as high-performance engineering polymers due to their high melting temperature, high heat and chemical resistance, low water absorption and high mechanical strength and stiffness. Thus, they are widely used in electronics (e.g., connectors, sockets, switches, surface mount devices, reflectors, and portable electronics housing) and light-weight automobile applications (e.g., powertrain components and electrical systems).

Unfortunately, the monomers, and resulting stoichiometric nylon salts, for preparation of these polyamides have a very low solubility in the usual solvents such as water or ethanol. For example, the precursor salt of PA 6-6 (poly(hexamethylene adipamide)) can be synthesized in water at 50°C with a mass concentration higher than 50 % mass, whereas the solubility of the PA 10-10 (poly(decamethylene sebacamide)) at the same temperature is only 1 % mass and even more the solubility of PA 10T (poly(decamethyle terephtamide)) is only 0.1 % mass.

Consequently, for obvious economic and energetic reasons, the standard salification method in homogenous aqueous solution is not suitable for the preparation of poorly soluble diacid/diamine salts such as long-chain aliphatic or semi-aromatic salts. In particular, their synthesis by the homogeneous solution route would require huge quantities of solvents. For example, the production by the homogenous solution method of 1 kg 6-6 salt (hexamethylene diamine (HDM): adipic acid (AA) salt) at 50°C requires 1 kg water; whereas 1 kg of 10-10 salt (decamethylene diamine (DMD):sebacic acid (SA) salt) at 50°C would require 1 kg of water and even 1 kg 10T salt (DMD: terephthalic acid (TA) salt) at the same temperature would require more than 1 ton of water.

Accordingly, there is a developing need for alternative routes for the synthesis of long-chain aliphatic and semi-aromatic stoichiometric diacid/diamine salts, which consist in industrially important precursors of high-performance polyamides.

To this end, different techniques have already been investigated. In particular, diacid/diamine salts have already been synthesized through liquid/solid, gas/solid or slurry techniques.

Thus, in the context of salification methods by solid state, mention may be made, for example, of document US 5,801,278, which provides a process in which liquid pure diamine, or with a maximum 10 % water, is added under constant stirring to diacid in a powder form. This leads to an immediate and exothermic formation of the nylon salt in the form of a paste. A cryogenic medium such as dry ice or liquid nitrogen can be used to cool the reaction medium. For example, 6-6 salt may be prepared by mixing adipic acid powder and the cryogenic medium, and then adding an aqueous solution containing more than 90 % of hexamethylene diamine (HMD) heated to 45°C over a period of 15 minutes. The process makes it possible to obtain a well-balanced diacid/diamine salt but exhibits the major disadvantage of requiring high energy cost.

More recently, US 2013/0172521 describes an alternative liquid/solid method for the synthesis of polyphthalamides (10T) by impregnation of diamine on a dicarboxylic acid powder. The diamine is added in a spray-form to the dicarboxylic acid powder. The reaction temperature is maintained between the melting point of the diamine and the melting point of dicarboxylic acid. The diamine in a liquid form penetrates into the powder phase of the dicarboxylic acid. In this way, a nylon salt powder can be efficiently prepared.

These methods leading to the formation of the nylon salt in a dry way enable to bypass the problem of low solubility in the usual solvents such as water or ethanol.

Another way is to obtain the nylon salt in the form of solid particles in suspension in one or more solvent(s). Such methods are referred to "slurry" methods. Some publications relate to so-called "slurry" methods for the synthesis of nylon salts.

By way of representation of a "slurry" method, mention may be made in particular of document US 3,869,400. The process which is described therein is based on the following steps: producing an aqueous slurry by adding aqueous solutions of bis(4-aminocyclohexyl)-methane and dodecanedioic acid at high temperature (130°C) in water thus forming a salt slurry of not over 35 % concentration, adjusting the pH of the slurry by addition of diamine or diacid.

This process however exhibits the drawback of being carried out in solution, thus requiring elevated temperature and pressure in the case of nylon salts with low aqueous solubility.

More recently, Boussia et al. (Macromolecular Materials and Engineering, 2010, 292, pp.812-821) have envisioned a salt preparation based on the dropwise addition of a solution of diacid in ethanol to a stirred HMD ethanolic solution. As the salt is insoluble, it rapidly precipitates to form a slurry. After the addition is completed, the reaction medium is cooled using an ice bath; the resulting suspension is filtered and dried under vacuum. The procedure yielded PA 6-12 salt, PA 6-13 salt and PA 6-14 salt with good yields (95-97 %). This method is however unsuitable for monomers that are insoluble in ethanol. The experimental amine and carboxyl end concentrations deviate slightly from the theoretical ones, leading to synthesized salts with end groups excess (D¼[COOH] - [NH2]) between -170 and +170 mequiv. kg

More recently, a study by Porfyris et al. (Journal of Applied Polymer science, vol. 133, 2016, app. 42987) investigates alternative routes for 4T salt (tetramethylene diamine: terephthalic acid salt) preparation, in particular through a slurry technique. More particularly, a 4T salt is prepared by adding drop-wise a concentrated aqueous TMD solution to a vigorous stirred aqueous TA slurry, while the apparatus was kept in an ice bath and under reflux so as to absorb the heat of the exothermic neutralization reaction. At the end of TMD addition, a salt slurry is formed, the product is then filtered under vacuum and dried. The 4T salt is obtained at a relatively low yield (67 %), indicating incomplete precipitation. The same process using ethanolic solutions leads to better yield of 98 % but highly viscous slurry.

Thus, these latter methods avoid a stage of solubilization. However, they exhibit the major disadvantage of leading to non-stoichiometric diacid/diamine salts. More specifically, the salts exhibit an excess of diacid which means a molar ratio diacid/diamine higher than 1.1 (+12 % mass TA). This acid excess should be attributed to unreacted TA which, as insoluble species, can be "trapped" in the formed salt during precipitation. It has been suggested that it could be the result of a heterogeneous crystallization due to rapid nucleation kinetics of salt and high supersaturation of diacid. This phenomenon of heterogeneous precipitation results from poor aqueous solubility of the diacid/diamine salt or of the dicarboxylic acid.

Yet, a control of the diacid/diamine molar ratio close to the stoichiometry is crucial to reach, after polycondensation, polyamides with high molecular weight that are suitable as high-performance engineering polymers (high melting temperature, high heat and chemical resistance, etc.).

Consequently, from the viewpoint of the above, it is apparent that the alternative techniques to the solution route for preparing long-chain aliphatic salts or semi-aromatic salts are not entirely satisfactory.

The present invention is targeted specifically at providing a novel process, suitable for industrial production, for preparing diacid/diamine salts by the slurry route which does not present the aforementioned drawbacks, and in particular which makes it possible to obtain high-quality stoichiometric salts with a satisfactory mass concentration and yield, at moderate operating conditions.

More precisely, the present invention relates, according to a first of its aspects, to a process for preparing a stoichiometric dicarboxylic acid/diamine salt having a solubility in water lower than or equal to 30 % mass at 50°C, by salification from at least one dicarboxylic acid and at least one diamine as monomers, wherein the entire salification reaction occurs in a heterogeneous aqueous medium, in which the quantities of solubilized dicarboxylic acid and of solubilized diamine are maintained at a diacid/diamine molar ratio of 1 ± 0.1, preferably of 1 ± 0.01.

As detailed in the rest of the text, the molar ratio between solubilized dicarboxylic acid and of solubilized diamine may be controlled via an adjustment of the addition rate to the reaction medium of at least one of the monomers, especially of the diamine or simultaneously of both monomers.

The process of the invention more particularly relies on a control of the reaction surface, that is to say an adjustment of the quantity of solubilized diamine in the reaction medium to the quantity of dicarboxylic acid solubilized in the homogenous liquid phase of the reaction medium. This advantageously promotes a stoichiometric and balanced reaction between diamine and dicarboxylic acid monomers, and restricts the phenomena of supersaturation or accumulation of one of the monomers regarding the other in order to allow for a homogeneous crystallization of the diacid/diamine salt.

Furthermore, as detailed in the following text, the conditions of the process of the invention may be adjusted to increase this reaction surface, especially by enhancing solubility of the dicarboxylic acid via the choice of the nature of the solvent(s) used in the reaction medium.

This makes it possible to improve dissolution and addition rate of the dicarboxylic acid from the suspended solid phase to the homogenous liquid phase of the slurry medium.

The process of the invention allows for total consumption of the dicarboxylic acid and diamine to form the resulted nylon salt, thereby avoiding insoluble dicarboxylic acid being trapped in the formed salt crystals during neutralization.

Two variants of the process of the invention, which may be considered, are presented below.

The process may comprise:
(a) the addition of diamine to a suspension of dicarboxylic acid in an aqueous medium; or
(b) the simultaneous and separate additions of dicarboxylic acid and diamine in an aqueous medium;
wherein the addition rate of the diamine and, in case of (b), the addition rate of dicarboxylic acid is/are adjusted so that, at each moment of the salification reaction, the quantities of solubilized dicarboxylic acid and of solubilized diamine in the reaction medium are in a molar ratio of 1 ± 0.1.

According to a first particular embodiment, the process is carried out through the addition of the diamine to an aqueous suspension or slurry of the dicarboxylic acid, in which the addition rate of the diamine is adjusted so that, at each moment of the salification reaction, the quantities of solubilized dicarboxylic acid and the quantity of solubilized diamine in the homogeneous liquid phase of the reaction medium are in a diacid/diamine molar ratio of 1±0.1, more preferably of 1±0.01.

The process of the invention according to this first variant may more particularly comprise at least the steps consisting in:
(a-1) providing, at a desired temperature, a suspension of the dicarboxylic acid in an aqueous medium, said suspension comprising preferably more than 10 % mass, in particular more than 30 % mass, and even more particularly more than 50 % mass, of dicarboxylic acid solid particles;
(a-2) adding the diamine to said suspension of dicarboxylic acid under conditions favorable to the formation of the diacid/diamine salt in solid particulate form,
wherein the addition rate of the diamine in step (a-2) is adjusted to the quantity of dicarboxylic acid solubilized in the suspension, in order to maintain at each moment of the salification reaction a molar ratio between the quantity of solubilized dicarboxylic acid and the quantity of solubilized diamine in the reaction medium of 1±0.1, preferably of 1±0.01.

As detailed hereafter, the process of the invention may comprise one or more subsequent steps, such as a step of pH adjustment, one or more steps of varying temperature (maturation step to increase the size of the salt crystals or crystallization step by cooling to increase the quantity of salt in suspension and maximize the reaction yield) and/or steps for recovering the nylon salt under a dry powder form.

According to a second particular embodiment, the process is carried out by simultaneous and separate additions of the dicarboxylic acid and of the diamine in an aqueous medium, in which the addition rates of the diamine and of the dicarboxylic acid are adjusted so that, at each moment of the salification reaction, the quantities of solubilized dicarboxylic acid and the quantity of solubilized diamine in the homogeneous liquid phase of the reaction medium are in a diacid/diamine molar ratio of 1±0.1, more preferably of 1±0.01.

The process of the invention according to this second variant may more particularly comprise at least the steps consisting in:
(b-1) providing an aqueous medium at a desired temperature;
(b-2) adding to said aqueous medium, separately and simultaneously, the diamine and the dicarboxylic acid,
wherein the addition rates of the diamine and of the dicarboxylic acid in step (b-2) are adjusted to maintain at each moment of the salification reaction a molar ratio between the quantities of solubilized dicarboxylic acid and of solubilized diamine in the reaction medium of 1±0.1, preferably of 1±0.01.

Likewise, the process according to this second particular embodiment may comprise one or more subsequent steps, such as a step of pH adjustment, one or more steps of varying temperature (maturation step to increase the size of the salt crystals or crystallization step by cooling to increase the quantity of salt in suspension and maximize the reaction yield) and/or steps for recovering the nylon salt under a dry powder form.

In the continuation of the text, "stoichiometric diacid/diamine salt" or "stoichiometric nylon salt" or "nylon salt" or "diacid/diamine salt" will be used to denote the stoichiometric dicarboxylic acid/diamine salt of solubility in water at lower than or equal to 30 % mass at 50°C yielded with the process of the invention.

As mentioned above, over the entire duration of the salification process of the invention, the quantities of solubilized diamine and of solubilized dicarboxylic acid, that is to say the quantities of diamine and of dicarboxylic acid dissolved in the homogeneous liquid phase of the slurry-type reaction medium, are maintained in a diacid/diamine molar ratio of 1±0.1, *i.e.* a molar ratio ranging from 0.9 to 1.1, more preferably in a diacid/diamine molar ratio of 1±0.01, *i.e.* a molar ratio ranging from 0.99 to 1.01, that is to say a molar ratio close to perfect equimolar ratio 1.

The term "solute" means a substance that is dissolved in a liquid medium.

Within the meaning of the invention, the solute content in a medium is intended to denote the weight content "w" defined as w=Mₛₒₗᵤₜₑ/M_{medium}, in which Mₛₒₗᵤₜₑ represents the total mass of the solute considered (for example diacid/diamine salt, diamine monomer or diacid monomer) in the considered medium; and M_{medium} is the total mass of the medium, that is to say the total mass of the solute and the solvent(s).

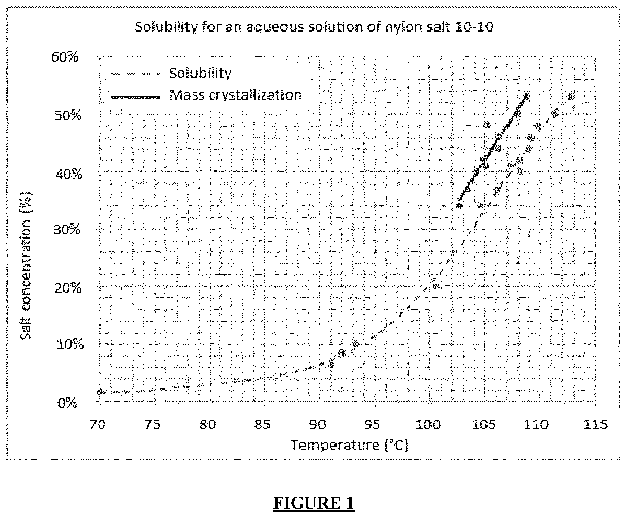

The "solubility" of a given substance in a given solvent is understood to mean the maximum mass of said substance that may be solubilized (i.e. the maximum solute content) in 100 g of said solvent at a given temperature. The solubility curve is defined by pairs of maximum solute concentration and temperature (C*, T*), each (C*, T*) pair corresponding to the maximum solute content C* in said solvent at the temperature T*. For example, figure 1 represents the solubility curve (or saturation curve), showing the relationship between the solubility and temperature, for the 10-10 salt (decamethylene diamine (DMD): sebacic acid (SA)) in water. Moreover, reference for solubility of dicarboxylic acids may be made to document Stanford Research Institute, Dibasic Acids For Nylon Manufacture, Report n°75, October 1971, p.296.

A "saturated" solution is a solution complying with a (C*, T*) pair (also called "saturation point") on the solubility curve for a given substance. This means that a saturated solution contains the maximum solute content (C*) that may be dissolved in said solvent at a given temperature (T*). In other words, it is not possible to dissolve any additional quantity of said substance in a saturated solution; the added substance will then remain in a solid form in suspension.

If a solution contains a concentration of said substance below the concentration C* of the saturation point of the solution, it is "unsaturated", which corresponds to the area below the solubility curve.

As for a "supersaturated" solution, it contains a concentration of said substance higher than the concentration C* of the saturation point of the solution, which corresponds to the area above the solubility curve. The slurry salification according to the invention precisely operates in this area, i.e. in a supersaturated solution of said diacid/diamine salt.

As for the curve of mass crystallization, it is obtained by measuring crystallization by cooling down a saturated solution (at a known concentration) at a constant rate until reaching temperature at which first crystal will appear (or nuclei) in the solution. The crystallization curve (or supersolubility curve), showing the relationship between the crystallization temperature (Tc) and concentration for the 10-10 salt in water, is represented in figure 1. A difference between crystallization temperature Tc and equilibrium temperature T * ranging between 5 to 10°C.

Crystallization temperature is the temperature related to liquid-solid thermodynamic equilibrium. Below this temperature (at a set concentration) appearance and development of the solid particle or crystal within the solution is promoted. We use such a process at the end of reactor to increase concentration of nylon salt crystal within the solution and improve yield recovery.

As mentioned above, the salification or neutralization reaction according to the process of the invention is carried out in an aqueous heterogeneous medium. A "heterogeneous medium", also known as a "slurry medium", is intended to denote a medium comprising a solid phase in suspension in a liquid homogeneous phase.

Of course, the composition of the reaction medium varies depending on the variant embodiment carried out and on the progress of the reaction. In any case, the concentration of solid phase in suspension in a liquid homogenous phase tends to increase all along the reaction of salification.

Generally speaking, the solid phase in the slurry-type reaction medium of the invention is formed, at a given instant of the reaction, of at least one of the excess monomer, preferably the dicarboxylic acid, and/or the diacid/diamine salt, that are present as solid particles in suspension in the liquid phase, because of the low solubility of these components in the respective solvent. As for the liquid phase in the slurry-type reaction medium of the invention, it is formed of at least one of the excess solubilized monomer that has not yet reacted, preferably the diamine, and/or of the minor part of diacid/diamine salt solubilized in the reaction medium.

The slurry route thus differentiates from the salt preparation techniques in solution which imply a moment when every component is dissolved and a clear salt solution is obtained. In this latter case, the reaction is carried out in concentration and temperature pair conditions above the solubility curve. In other words, temperature is kept below the temperature T* of the salt saturation point of the solution for a given concentration; or the salt concentration is maintained at a concentration above the concentration C* of the salt saturation point for a given temperature.

The process of the invention proves to be particularly advantageous on several accounts.

First of all, as illustrated in the example that follows, it makes it possible to synthesize, at moderate temperatures, dicarboxylic acid/diamine salts of low solubility at a controlled stoichiometry and higher concentrations (C) than allowed value by the concentration C* of the salt saturation point at a given temperature, insofar as the salification reaction according to the invention operates in the supersaturated zone which can be defined by absolute supersaturation ΔC=C-C*.

More specifically, the process of the invention is suitable for preparing diacid/diamine salts having a solubility in water at 50°C lower than or equal to 30 % mass, preferably ranging from 5 % mass to 30 % mass, and more particularly from 5 % mass to 10 % mass.

Such diacid/diamine salts may be in particular chosen in the group consisting of:
- long-chain aliphatic salts, that is to say aliphatic salts having a total number of carbon atoms greater than or equal to 20, for example the so-called "10-10 salt" (decamethylene diamine (DMD): sebacic acid (SA)), "12-12 salt" (1,12-dodecanediamine: dodecanedioic acid (DDA)) and "10-12 salt" (decamethylene diamine (DMD): dodecanedioic acid (DDA)); and
- semi-aromatic salts, especially comprising a linear or branched diamine having a total number of carbon atoms greater than or equal to 6, in particular semi-aromatic salts comprising terephthalic acid as diacid. Mention may be made of the so-called "6T salt" (hexamethylene diamine (HMD): terephthalic acid (AT)), "10T salt" (DMD: AT) and "12T salt" (1,12-dodecanediamine:AT).

According to a particular embodiment, the process of the invention is carried out for preparing preferably a 6T salt.

In particular, the diacid/diamine salt is obtained in the form of solid crystals.

In addition, as mentioned above, the process of the invention yields to a well-balanced diacid/diamine salts. As demonstrated in the example which follows, it makes it possible to form stoichiometric diacid/diamine salts. The term "stoichiometric" is understood to mean that the salt has a diacid/diamine molar ratio equal to 1:1 ± 5.10⁻², preferably 1:1 ± 5.10⁻³ and still more preferably 1:1 ± 5.10⁻⁴. In other words, the diacid/diamine molar ratio of the salts obtained by the process of the invention ranges from 0.95 to 1.05, preferably from 0.995 to 1.005 and still more preferably from 0.9995 to 1.0005.

The salts are thus advantageously free of any unreacted diacid traces thanks to the complete reaction of the diacid with the diamine during salification. These high-quality salts are particularly suitable to synthesize diacid/diamine polyamides of high molecular weight, especially by a direct solid-state polymerization or by melt polymerization.

In addition, high mass concentrations of salt in the range of 40 to 60 % mass at 50°C can be achieved, and especially of greater than the ones obtained by the homogenous solution route, while using same or lower temperatures.

Thus, a process of the invention is suitably carried out close to ambient pressure (more particularly in a slight overpressure of nitrogen lower than 50 mbar to avoid oxidation of the salt) and at moderate temperature.

"Moderate temperature" is meant a temperature lower than the boiling temperature of the salt solution. By way of example, for a 66 nylon salt, the boiling temperature at atmospheric pressure is ranging from 100 to 110°C. In particular, it does not require any overheating step for solubilizing all monomers or the diacid/diamine salt. More particularly, the process may be carried out at a temperature well below the temperature needed for the complete dissolution of the salt. Preferably, the salification reaction of a process according to the invention may be carried out at a temperature lower than or equal to 70°C, especially lower than or equal to 50°C.

The "temperature for the complete dissolution of the salt" is intended to denote the temperature above which the salt can be fully solubilized or dissolved in a given medium. In other words, for a given salt concentration C*, it is the temperature equal or above T* of the salt saturation point (C*, T*) of the solubility curve of said salt.

Advantageously, the process of the invention thus avoids any undesirable degradation of the salt quality that could occur at high temperatures. Further, the process of the invention is carried out in an inert atmosphere (in particular, under a nitrogen atmosphere) to avoid any oxidation of the nylon salt.

Furthermore, progress of the salification reaction can be followed by pH measurement as detailed below.

The salt is obtained at the end of the salification reaction according to the invention in solid particulate form in suspension in aqueous solvent(s). The salt in a solid dry form, especially in the form of free flowing crystals, may thus be collected by filtration and drying stages without requiring any addition of nonsolvent in order to precipitate the salt, as it is the case for example in the salt preparation techniques in solution.

Further, as demonstrated in the example that follows, a good control of the process of the invention is made possible via an adjustment of the addition rates, temperature of the reaction medium and yielded mass concentration of the salt. In particular, an adjustment of the morphology of the salt, in particular by varying the reaction temperature, is envisioned to obtain the particle size that is suitable for end-use of the salt.

Finally, the process of the invention leads to high conversion, in particular with yields ranging from 70 to 100 %, and more preferably with yields higher than 90 %.

The diacid/diamine salt obtained by a process according to the invention, preferably in a dry powder from, is stable precursor suitable for its use in the preparation of polyamides. The invention is also directed, according to another of its aspects, to an optimized process for preparing polyamides.

This process concerns preparation of a polyamide from diamine and dicarboxylic acid, and comprises at least the steps of:
(i) preparing a stoichiometric dicarboxylic acid/diamine salt according to a slurry-type process of the invention as mentioned above; and
(ii) polymerizing said dicarboxylic acid/diamine salt under conditions favorable to achieve the desired polyamide.

Advantageously, the diacid/diamine salts obtained in a solid form by a process of the invention can lead to polyamides by direct solid-state polymerization or melt polymerization.

Other characteristics, alternative embodiments and applications of the process according to the invention will emerge more clearly on reading the description, example and figures which follow, given by way of illustration and without implied limitation.

In the continuation of the text, the expressions "of between ... and ...", "ranging from ... to ..." and "varying from ... to ..." are equivalent and are intended to mean that the limits are inclusive, unless otherwise mentioned.

Unless otherwise indicated, the expression "comprising a" should be understood as "comprising at least one".

### PREPARATION OF A STOICHIOMETRIC DIACID/DIAMINE SALT

As mentioned above, the slurry process according to the invention is carried out from dicarboxylic acid and diamine monomers.

For the preparation of the salt according to the invention, different diamines and dicarboxylic acids can be used. Of course, the nature of the monomers are chosen depending on the end use of the diacid/diamine salt.

Suitably, the dicarboxylic acid may be selected from aliphatic dicarboxylic acids having at least 10 carbon atom, aromatic dicarboxylic acids and mixtures thereof.

Mention may be made as aliphatic dicarboxylic acids of sebacic acid (abbreviated as SA), undecanedioic acid or dodecanedioic acid (abbreviated as DDA)

Possible aromatic dicarboxylic acids are for example terephthalic acid (abbreviated as TA), 2,6-naphthalene dicarboxylic acid and biphenyl-4,4'-dicarboxylic acid. Preferably, the aromatic dicarboxylic acid is terephthalic acid.

In a particular embodiment, the dicarboxylic acid may be selected from terephthalic acid, sebacic acid and mixtures thereof.

According to a particular embodiment, the dicarboxylic acid has a solubility in water lower than or equal to 10 % mass at 50°C.

Preferably, the dicarboxylic acid is selected from terephthalic acid because it is mostly used in semi-crystalline semi-aromatic polyamides.

The dicarboxylic acid may comprise a mixture of two or more different dicarboxylic acids. According a specific embodiment, the dicarboxylic acid may comprise at least one aliphatic dicarboxylic acid and at least one aromatic dicarboxylic acid, in particular as defined above. In these cases, the salt preparation will result in a mixture of salts.

As for the diamine monomer, it may be suitably selected from linear or branched aliphatic C₆-C₁₂ diamines.

More particularly, the C₆-C₁₂ aliphatic diamine is a linear aliphatic diamine, in particular selected from hexamethylene diamine (or 1,6-hexanediamine abbreviated as HMD), octamethylene diamine (or 1,8-octanediamine), decamethylene diamine (or 1,10-decanediamine, abbreviated as DMD), dodecamethylene diamine (or 1,12-dodecanediamine) and mixtures thereof.

In particular, the diamine may be selected from hexamethylene diamine, decamethylene diamine and mixtures thereof. Preferably, the diamine may be hexamethylene diamine.

In a particular embodiment, the diamine may comprise a mixture of two or more different diamines.

As mentioned above, the reaction medium of the process according to the invention is a heterogeneous aqueous medium or slurry-type aqueous medium.

The "reaction medium" is understood to mean the medium in which the salification chemical reaction occurs. Of course, the composition of the reaction medium varies depending on the variant embodiment carried out and on the progress of the reaction. The reaction medium comprises one or more solvent(s) and, depending on the progress of the reaction and the embodiment variant, the monomers (diamine and/or diacid in a solubilized form and/or in the form of solid particles in suspension) and/or the yielded diacid/diamine salt (mainly in the form of solid particles in suspension).

As mentioned above, according to a specific embodiment, the nature of solvent(s) used in the aqueous reaction medium is suitably adjusted to control, in particular to enhance, the solubility of the dicarboxylic acid in the aqueous medium. This makes it possible to improve the dissolution of the dicarboxylic acid, from its suspended solid particles form to its solubilized form for the duration of the salification reaction.

More particularly, the aqueous reaction medium may comprise water and optionally one or more co-solvents.

These co-solvents may be chosen from C₁-C₄-alcohols, for example ethanol.

A person skilled in the art is in a position to choose the nature of said co-solvents and to adjust the proportion of water/co-solvents to optimize the solubility limit of the dicarboxylic acid in the reaction medium.

According to a specific embodiment, the reaction medium comprises water/cosolvent(s), in particular water/C₁-C₄-alcohols in a volume ratio ranging from 100/0 to 10/90. For example, in the case of the synthesis of a salt involving sebacic acid, the reaction medium may suitably comprise ethanol in a water/ethanol ratio ranging from 50/50 to 10/90, in particular of 15/85.

It is up to a person skilled in the art to adjust the reaction conditions of the slurry salification process according to the invention.

Thus, the reaction medium is preferably kept under stirring during the entire salification reaction.

This ensures that the dicarboxylic acid and/or the diacid/diamine salt which are present in the form of solid particles in the slurry-type reaction medium are held in suspension for the duration of the salification reaction, and allows a better homogenization of the monomers and resulting salt in the reaction medium, thereby enhancing a homogeneous crystallization of the diacid/diamine salt and further improving the stoichiometry of the salt.

The process of the invention may be suitably carried out in a mechanically stirred reactor. It may also be carried out in any other possible equipment, such as side stream pipes, mechanical conveyor, filter, discharge valve, recirculation line and/or sampling line using centrifugal pumps, static mixers or specific mixing device and any combinations thereof.

According to a preferred embodiment, the reactors of the installation are maintained under an oxygen-free atmosphere by feeding an inert gas, such as nitrogen, so as to maintain and renew the inert reactor atmosphere during operation of the reactors.

The process of the invention can be carried out in batch-mode embodiment or a semi-continuous-mode embodiment. Operation in batch-mode embodiment is preferred.

Further, as mentioned above, the salt formation according to the process of the invention is advantageously carried out under mild reaction conditions. More particularly, the salification reaction is suitably carried out at atmospheric pressure or under slight overpressure of nitrogen (strictly lower than 50 mbar).

In addition, the temperature of the reaction medium is advantageously kept, during the entire reaction, for the desired salt concentration C, at a value below the temperature for the complete dissolution of the salt, that is to say well below the temperature T* of the salt saturation point (corresponding to a (C*,T*) pair of the solubility curve, as explained above).

More particularly, the temperature of the reaction medium is kept for a given desired salt concentration C, at least 10°C below the temperature T* of the salt saturation point, preferably at least 20°C below the temperature T* for the complete dissolution of the diacid/diamine salt.

The reaction medium thus may advantageously be kept, during the entire reaction, at a temperature lower than the boiling point of the reaction medium, in particular lower than or equal to 70°C and more particularly lower than or equal to 50°C.

The temperature of the reaction medium can be maintained constant using cooling means, for example a reactor cooled thanks to a double jacket, to absorb the heat of the exothermic neutralization reaction. It also may be equipped with means for heating or cooling the tank reactor using double jacket or internal coil to adjust the temperature of the reaction medium and absorb the heat of the exothermic neutralization during the reaction.

According to a specific embodiment, the end reaction temperature may be further adjusted depending on the desired grain size and morphology, especially of the salt crystals.

The temperature for salification may be maintained at a temperature between 50 and 70°C during the addition of the diamine and dicarboxylic acid monomers. The temperature for salification may be maintained at a constant value, for example between 50 and 70°C, during the addition of the diamine and dicarboxylic acid monomers.

According to a particularly preferred embodiment, the total molar amount of diamine and the total molar amount of dicarboxylic acid conveyed in the reaction medium are preadjusted so that, after the addition(s) is(are) completed, these quantities are in equimolar proportion, i.e. a molar ratio between the total moles of diamine and the total moles of dicarboxylic acid involved in the process of 1±0.1, preferably 1±0.01.

According to a particularly preferred embodiment, progress of the salification reaction can be monitored by pH measurement in the reaction medium.

More particularly, the end of the reaction can be identified through pH rise, which marks out stoichiometric point of the salt.

Indeed, during the salification reaction, the pH of the reaction medium evolves according to the composition of the aqueous phase. A pH rise is associated with a low amount of unreacted diamine in the reaction medium, which means that, at the given instant of the reaction, all the dicarboxylic acid has reacted.

Other characteristics for each of the implementation variants of the process in accordance with the invention will be given below.

### First embodiment

As mentioned above, in this first embodiment for preparing stoichiometric diacid/diamine salts according to the invention, the diamine is slowly added to an aqueous suspension or slurry of the dicarboxylic acid.

More particularly, this first variant comprises at least the steps of:
(a-1) providing a suspension of dicarboxylic acid in an aqueous medium; and
(a-2) adding diamine to said suspension of dicarboxylic acid under conditions favourable to the formation of the diacid/diamine salt in solid particulate form;
wherein the reaction medium is kept under stirring during steps (a-1) and (a-2) and at a temperature, preferably a constant temperature, lower than the temperature T* of the salt saturation point, in particular at a temperature lower than or equal to 70°C and more particularly lower than or equal to 50°C;
and wherein the addition rate of diamine in step (a-2) is adjusted to the quantity of dicarboxylic acid solubilized in the suspension, in order to maintain at each moment of the salification reaction a molar ratio between the quantity of solubilized dicarboxylic acid and the quantity of solubilized diamine in the reaction medium of 1±0.1, preferably of 1±0.01.

The first variant thus relies on the control of the reaction surface by an adjustment of the addition rate of the diamine in the slurry medium. More particularly, the flow rate of diamine depends on the dissolution kinetics of the dicarboxylic acid in the reaction medium. That is to say, the flow rate of diamine is adjusted to the quantity of dicarboxylic acid solubilized in the homogeneous liquid phase of the slurry-type reaction medium, which depends on the solubility of the dicarboxylic acid in the reaction medium.

Examples of diacid/diamine salts that can be advantageously prepared with this first variant include HMD:TA salt (6T salt) and DMD:TA salt (10T salt).

As mentioned above, the composition of the slurry-type reaction medium varies depending on the progress of the reaction.

In the context of this first variant, the initial reaction medium is an aqueous suspension (slurry) of dicarboxylic acid. Due to its low solubility in water, the dicarboxylic acid is mostly present in the form of solid particles in suspension in the aqueous medium. The initial suspension or slurry of said dicarboxylic acid in step (a-1) preferably comprises more than 10 % mass, in particular more than 30 % mass and more particularly more than 50 % mass of dicarboxylic acid solid particles.

The slurry of dicarboxylic acid in step (a-1) and more particularly, as mentioned above, the reaction medium for the duration of the salification reaction, is kept under vigorous stirring. This makes it possible a homogenous dispersion of the dicarboxylic acid particles in the slurry and prevents any deposition that will disrupt the quantity of dicarboxylic acid solubilized in the reaction medium during the salification process.

The slurry of dicarboxylic acid in step (a-1) may be prepared in a previous stage by mixing dicarboxylic acid in a powder form in one or more solvent(s) to reach a supersaturation in dicarboxylic acid. Obviously, it is up to a person skilled in the art to choose a total quantity of dicarboxylic acid introduced in the initial reaction medium, depending on the solubility limit of said dicarboxylic acid in the solvent(s) used and on the mass concentration of diacid/diamine salt in the final slurry that is targeted.

As discussed above, the solvent(s) in the reaction medium may be advantageously selected to increase the salification reaction surface, that is to say to enhance the solubility of the dicarboxylic acid in the slurry.

As for the diamine, it may be conveyed in step (a-2) in the reaction medium in a solid form, in a liquid form or in the form of a stream of inert gas saturated in diamine, preferably in a liquid form.

Preferably, the diamine is conveyed in its pure liquid form or in the form of an aqueous solution by dilution in one or more solvents, especially in the solvent(s) used for the aqueous diacid slurry in step (a-1).

It is up to a person skilled in the art to adjust the addition rate of the diamine in step (a-2) to the pre-determined quantity of dicarboxylic acid solubilized in the reaction medium to maintain a molar ratio of solubilized diacid/diamine of 1±0.1, more preferably of 1±0.01.

It is possible to check that the addition rate of diamine is adequate to the solubilized quantity of dicarboxylic acid through pH monitoring of the reaction medium. Thus, the pH of the reaction medium is preferably maintained, during the diamine addition, to a value ranging from 4 to 5. The pH rise to a value of 8-9 marks out stoichiometric point of the salt, as discussed here-above. After addition is completed, a pH monitoring makes it possible to add diamine or diacid to adjust molar ratio of diacid/diamine salt.

Once the addition of diamine initiated, the solid phase of the slurry-type reaction medium comprises non-reacted dicarboxylic acid solid particles and the already formed diacid/diamine salt particles.

In the context of this first variant, the slurry-type reaction medium preferably comprises for the duration of the salification reaction a solid content higher than 20 % mass, in particular higher than 40 % mass and more particularly higher than 50 % mass. This concentration tends to progressively increase all along the reaction while adding the diamine by conversion with the diacid into diacid/diamine salt which precipitates in the reaction medium.

After the addition is completed and the whole dicarboxylic acid consumed, the final reaction medium is a slurry of diacid/diamine salt in aqueous solvent(s).

Thus, the addition of diamine in a continuous way with a controlled flow rate makes it possible to ensure an immediate consumption of the diamine by reaction with the solubilized dicarboxylic acid, thereby enhancing homogeneous nucleation and growth of the crystals, and formation of high-quality diacid/diamine salts of a good stoichiometry. In particular, the process of the invention allows for avoiding insoluble dicarboxylic acid being trapped in the formed salt crystals.

As detailed hereafter, the process of the invention may comprise one or more subsequent steps, such as step of pH adjustment, one or more steps of varying temperature (maturation step to increase the size of the salt crystals or crystallization step by cooling to increase the quantity of salt in suspension and maximize the reaction yield) and/or steps for recovering the diacid/diamine salt under a dry powder form.

### Second embodiment

As mentioned above, in this second embodiment for preparing stoichiometric diacid/diamine salts according to the invention, the diamine and the dicarboxylic acid are separately and simultaneously slowly introduced in the reaction aqueous medium.

More particularly, this second variant comprises at least the steps of:
(b-1) providing an aqueous medium, in particular as defined above; and
(b-2) adding to said aqueous medium, separately and simultaneously, the diamine and dicarboxylic acid,
wherein the reaction medium is kept under stirring during step (b-2) and at a temperature, preferably at a constant temperature, lower than the temperature T* of the salt saturation point, in particular at a temperature lower than or equal to 70°C and more particularly lower than or equal to 50°C;
and wherein the addition rates of diamine and dicarboxylic acid in step (b-2) are adjusted to maintain, at each moment of the salification reaction, a molar ratio between the quantities of solubilized dicarboxylic acid and of solubilized diamine in the reaction medium of 1±0.1, preferably of 1±0.01.

Example of diacid/diamine salt that can be advantageously prepared with this second variant includes DMD:SA salt (10-10 salt).

As mentioned above, the composition of the slurry-type reaction medium varies depending on the progress of the reaction.

In the context of this second variant, the initial medium prior to the introduction of the monomers only comprises one or more solvent(s). As discussed above, the solvent(s) in the reaction medium may be advantageously selected to enhance the solubility of the dicarboxylic acid.

After the addition of the diamine and dicarboxylic acid initiated, the slurry-type reaction medium comprises in solid phase non-solubilized dicarboxylic acid solid particles and the immediately formed diacid/diamine salt particles.

Preferably, the addition rate of dicarboxylic acid is adjusted to maintain a quantity of non-reacted dicarboxylic acid solid particles in the reaction medium strictly lower than 20 % mass, preferably strictly lower than 10 % mass.

The dicarboxylic acid may be conveyed in the reaction medium in a powder form or in the form of a suspension in one or more aqueous solvent(s), especially in the solvent(s) used for the aqueous medium in step (b-1), especially with a solid content strictly lower than 20 % mass, preferably lower than 10 % mass, related to the diacid suspension, is preferred to enhance an immediate reaction of the dicarboxylic acid and of the diamine in the reaction medium.

As for the diamine, as mentioned for the first variant, it may be conveyed in the reaction medium in a solid form, in a liquid form or in the form of a stream of nitrogen saturated in diamine.

Preferably, the diamine is conveyed in its pure liquid form or in the form of an aqueous solution by dilution in one or more solvents, especially in the solvent(s) used for the aqueous medium in step (b-1).

According to a particular embodiment, the adjustment of the addition rates of diamine and dicarboxylic acid more particularly comprises for the duration of the salification reaction:
- a flow rate of dicarboxylic acid monomer adjusted to maintain a quantity of non-reacted dicarboxylic acid in suspension strictly lower than 20 % mass, preferably lower than 10 % mass; and
- a flow rate of diamine monomer to maintain a molar ratio between solubilized dicarboxylic acid and solubilized diamine in the reaction medium of 1±0.1, more preferably of 1±0.01.

In the context of this first variant, the slurry-type reaction medium preferably comprises for the duration of the salification reaction a solid content higher than 20 % mass, in particular higher than 40 % mass and more particularly higher than 50 % mass. This concentration tends to progressively increase all along the reaction while adding the diamine by conversion with the diacid into diacid/diamine salt which precipitates in the reaction medium.

As for the first variant, it is possible to check that the addition rates of diamine and dicarboxylic acid are adequate through pH monitoring of the reaction medium. Thus, the pH of the reaction medium is maintained for the duration of the diamine and dicarboxylic acid addition to a value ranging from 6 to 9, preferably from 8 to 9. pH monitoring makes also it possible according to a particular embodiment to identify the end of the reaction being through pH rise, which marks out stoichiometric point of the salt, as discussed below as explained here-above.

After the addition is completed and the whole dicarboxylic acid and diamine consumed, the final reaction medium is a slurry of diacid/diamine salt in aqueous solvent(s).

Thus, the addition of diamine and dicarboxylic acid in a continuous way with controlled flow rates makes it possible to ensure an immediate consumption of the solubilized diamine and solubilized diacid, thereby enhancing homogeneous nucleation and growth of the crystals, and formation of high-quality diacid/diamine salts of a good stoichiometry. In particular, the process of the invention allows for avoiding insoluble dicarboxylic acid being trapped in the formed salt crystals.

### Additional steps

The obtained suspension at the end of the salification reaction is a slurry solution of stoichiometric diacid/diamine salt, possibly at a salt mass concentration in the range of 40 to 60 % mass at 50°C, preferably at a salt mass concentration in the range of 40 to 60 % mass at the reaction temperature.

The slurry comprising said stoichiometric diacid/diamine salt at the end of the salification reaction may be subsequently submitted to one or more additional steps, such as step of pH adjustment, one or more steps of varying temperature (maturation step to increase the size of the salt crystals and/or crystallization step by cooling to increase the quantity of salt in suspension and maximize the reaction yield) and/or steps for recovering the diacid/diamine salt under a dry powder form.

Thus, according to a particular embodiment, the process of the invention may comprise, subsequently to the salification reaction, a step of pH adjustment of the suspension to a neutral pH. This may be carried out by addition of diacid or diamine, preferably diamine.

According to one particular embodiment, the process may comprise at least one maturation step by heating the suspension of diacid/diamine salt in order to modify the grain size and morphology of the salt crystals, especially to increase the size of the salt particles.

The maturation step may be carried out by heating at a temperature below the boiling point of the solution, in particular ranging from 70°C to 100°C, in particular during at least 1 hour, especially between 1 hour and 4 hours, preferably between 1 hour and 2 hours.

Advantageously, such a maturation stage will enable to improve the stoichiometry of the salt and reach a perfectly stoichiometric salt.

The process may also comprise according to another particular embodiment a precipitation (crystallisation step), wherein the temperature is lowered to decrease the solubility of the salt in the reaction medium, and thus to recover the higher quantity of nylon salt in a solid form.

Finally, the diacid/diamine salt may be isolated as a solid, in particular in the form of free flowing crystals by submitting the salt suspension to one or more filtration and drying stages.

Any type of known treatments may be used. For example, the salt suspension may be cooled down at a temperature below 40°C and then filtrated to separate solid from the solvent. Alternatively, the salt suspension may be brought to boil under vacuum in order to evaporate the excess water. The remaining solid may be dried, for example at a temperature below 80°C and under vacuum, to obtain flowing white powder of dry dicarboxylic acid/diamine salt.

The granulometry of the diacid/diamine salt depends on its chemical nature and on the salification temperature. Generally, the powder of said diacid/diamine salt may have a volume medium particle size (d50) in the range of from 10 to 1000 µm, more preferably in the range from 100 to 500 µm.

### PREPARATION OF POLYAMIDES

As mentioned above, the stoichiometric diacid/diamine salts obtained by a process according to the invention, preferably in a dry powder form, are suitably used for the preparation of polyamides, especially for the preparation of semi-aromatic polyamides or long-chain aliphatic polyamides.

Polyamides made from diamine and dicarboxylic acid are also known as AA-BB polyamides. The nomenclature is adhered to as used in Nylon Plastics Handbook, Edited by Melvin I. Kohan, Hanser Publishers, 1995; e.g. PA 6T denotes a homopolymer with buildings blocks hexamethylene diamine and terephthalic acid.

The term "polyamide" as used herein includes both homopolyamides and copolyamides. The process according to the invention allows for the production of copolymamide, or polyamide copolymer, when more than one diamine and/or more than one dicarboxylic acid are used to produce the diacid/diamine salt; whereas a homopolyamide, or polyamide homopolymer, is produced when only one diamine and one dicarboxylic acid are used.

Examples of suitable polyamides that can be prepared with a process of the invention are PA 6T (or poly(hexamethyleneterephthalamide)), PA 10T (poly(decametyleneterephthalamide) and PA 10-10 (or poly(decamethylene sebacamide).

According to a specific embodiment, the process of the invention is suitably used for the preparation of PA 6T or PA 10T, especially for the preparation of PA 6T.

Polymerisation of diacid/diamine salts are known in the art. Generally, it may be carried out by melt-polymerization, solution polymerization or direct solid-state polymerisation.

The process according to the invention is particularly advantageous as it involves high-quality diacid/diamine stoichiometric salts.

The polymerisation of diacid/diamine salts with a controlled stoichiometry allows the synthesis by polycondensation of polyamides of high molecular weight that are of particular interest in view of their mechanical properties and thermal stability.

There is no particular limitation on the polyamide which may be synthesized by a process according to the invention, provided that it is obtained from a diacid/diamine salt as described above.

According to a first embodiment, polycondensation can be performed by a melt-polymerization method, wherein the diacid/diamine salt is melted in presence of a soluble initiator. Such process is advantageous in that it does not require any solvent.

According to another embodiment, polycondensation is performed by a solution-polymerization method, wherein the diacid/diamine salt is dissolved in a solvent which may contain a catalyst. After polycondensation reaction, the obtained polyamide may subsequently be submitted to one or more treatment steps in order to complete the polymerization, to separate the solvent(s) and/or obtain polyamide in a dry solid form.

According to a particularly preferred embodiment, polycondensation of diamine/dicarboxylic acid salts is performed by direct solid-state polymerization (abbreviated as DSSP).

With the term "solid-state polymerization" is herein understood that the polymerization is carried out under conditions such that the diacid/diamine salt, the polyamide and any intermediate condensation product thereof remain in the solid state. This is accomplished by using reaction temperatures for the condensation step(s) below the melting temperature of the diacid/diamine salt, below the melting temperature of the polyamide, and any intermediate product thereof. Accordingly, the DSSP method overcomes the problems associated with the high-temperatures used in the melt technology, especially regarding thermal degradation and/or branching that occurring during reaction. In addition, due to the low temperature involved and the absence of solvents, DSSP is considered as a "green" polymerization route.

Suitably, the condensation temperature is kept at least 10°C, preferably at least 20°C below melting temperature of the salt. The DSSP process thus does not require any melting of the salt or polymer.

Polycondensation by DSSP is particularly well-suited for the semi-aromatics diacid/diamine salts that have a melting point above 200°C.

The DSSP process can be carried out in two steps, wherein a nucleation is firstly initiated at the interface of the diacid/diamine salt crystallites, then followed by a propagation step by polycondensation. The water generated by the polycondensation diffuses in the solid phase to the surface of the particles and may be driven with a nitrogen flush.

The DSSP process may be carried out in any reactor that is suitable for direct solid-state polymerization of the diacid/diamine salt. For example, it may be carried out in a static bed reactor, a moving bed reactor or an agitated bed reactor.

The invention will now be described by means of the following examples and figures, given by way of illustration and not of limitation of the invention.

### FIGURES

- Figure 1 :: Solubility curve and mass crystallisation curve for an aqueous solution of nylon salt 10-10;
- Figure 2 :: Particle size distribution curves obtained by Malvern laser granulometer for 6T salts prepared according to example 1;
- Figure 3 :: SEM images of 6T salts prepared according to example 1.

### EXAMPLE

### Preparation of a HMD/TA salt (6T salt) by a salification process according to the invention

### Experimental set-up

The assays are carried out at the pilot stage using a 1L jacketed reactor equipped with a bottom discharge valve, a thermostatically controlled bath, a mechanical agitation (0 to 2000 rpm) and a refrigerant. A draining funnel may be used for introducing liquid products. For powders, a solid-introducing funnel equipped with a worm screw driven by a motor is used. A nitrogen flux may be injected either on top of the reactor in order to avoid oxidation of the salt, or on top of the powder-introducing funnel if present, in order to avoid formation of agglomerates.

The temperature monitoring is implemented with a thermometer introduced in the reactor. For monitoring and controlling the stoichiometry, the pH is measured via a probe during all the reaction.

The experimental set-up makes it possible to vary different parameters such as the addition rate of the monomers, temperature, solvent, stirring rate and mass percent of the produced salt.

### Salification method

An aqueous suspension of terephthalic acid (TA) is first prepared with a predetermined mass concentration. The quantity of added hexamethylene diamine (HMD) is predetermined to obtain, at the end of the addition of all the diamine, a molar ratio diacid/diamine of 1.

These quantities are adjusted in view of the targeted concentration from 40 % to 60 % mass in HMD/TA salt.

Liquid HMD solution at a concentration of 80 % mass is added drop-wise (adjusted addition rate to stay below 1g/min) to an aqueous suspension of terephthalic acid (TA) under stirring. First, water and terephtalic acid are loaded to obtain an initial slurry solution at a concentration between 30 % and 50 % mass. The solution is heated to reach a temperature of between 40 and 70°C.

The reaction medium is cooled during the reaction (in so far as salification is exothermic) to maintain a temperature below 70°C and kept under stirring (800 rt/min) to obtain a homogeneous suspension of terephtalic acid and/or HMD/TA salt particles.

At the end of HMD introduction, the slurry is kept between 1 and 2 hours under stirring at constant temperature (lower than the temperature of solubility limit) to complete reaction. Then, the suspension is cooling down at a constant rate (lower than 1°C/min to complete crystallisation and increase dry nylon salt yield.

Four trials according to this protocol were performed by varying temperature of the solution during addition of HMD, addition rate and targeted salt concentration, as shown in the following table 1.

**TABLE 1**

| **Assay** | **Salt concentration (% mass)** | **Temperature added HMD (°C)** | **HMD addition rate (g/min)** |
|---|---|---|---|
| 1 | 40 | 40 | 0.9 |
| 2 | 50 | 40 | 0.4 |
| 3 | 50 | 50 | 0.4 |
| 4 | 60 | 70 | 0.6 |

### Results

Progress of the reaction is followed by pH measurement.

A rise in pH and in temperature can be observed from the start of the HMD addition, which indicate a neutralization of the added HMD by the consumption of the soluble acid within the solution. This is followed by a pH stabilisation.

A sudden pH rise is observed at the end of the diamine addition, indicating that all the acid has been consumed. Such pH rise marks out stoichiometry point of the salt. As it occurs at the end of the addition of the quantity of diamine planned as equimolar to the quantity of diacid, it indicates that the obtained salt is highly likely well stoichiometric with no acid trapped inside. Indeed, if acid has been trapped into the salt, said pH rise would have been observed well before the end of diamine addition.

The slurry's viscosity increases with the mass concentration of salt. The mass concentration of salt should not exceed 60 % mass. Above this concentration, the obtained slurry is too viscous to operate with homogenous suspension.

A salification process at low temperature (around 40°C) is possible when applying a high stirring of the reaction medium (> 800 rpm).

The process may be carried out at a temperature strictly lower than the boiling temperature of the reaction medium and lower than the temperature of the salt saturation point (temperature T* corresponding to the working salt concentration C* on the salt solubility curve) to keep a supersaturated solution.

As a remark, when the 6T salt is synthesized by a homogeneous solution process, concentrations up to 50% mass can be obtained at a temperature higher than 95°C at atmospheric pressure; whereas the slurry process according to the invention makes it possible to reach equivalent and even higher concentrations (50%) at lower temperature (50°C). This renders the slurry process according to the invention particularly advantageous compared to the common homogenous solution process.

Further, a pH control cannot be operated at a temperature above 60°C.

### Characterisation of the obtained salts

Once synthesized, the slurry is drained out of the reactor before being filtered at ambient temperature in order to recover wet solid salt. Then, it is washed with cold ethanol or isopropanol, and dried in a vacuum oven for one night at a temperature between 70 and 80°C. The crystal salt could be then filtered, washed and dried a second time.

The reaction yield was determined from the dry mass of the obtained salt. The composition of the salts was analysed by determining melting temperatures and molar ratio. The salt crystals were further analysed by determination of their granulometry and morphology.

### Characterisation methods

### DSC analysis:

DSC (differential scanning calorimetric analysis) analysis are carried out with a Perkin Elmer 8000 device calibrated with indium (melting point of 156.6°C) as a reference in order to determine the thermal properties of the salts, such as melting point. Each samples of 5-15 mg is analysed in a hermetic aluminium capsule. The measurements are performed under a nitrogen gas flow of 20 mL/min. The temperature program is as follows: 1 minute at 30°C, temperature ramp from 30°C to 200°C with 40°C/min heating rate, temperature ramp from 200°C to 30°C with 40°C/min heating rate, temperature ramp from 30°C to 350°C with 20°/min heating rate, 1 minute at final temperature.

### pH calibration curve for determination of molar ratio:

The pH of the salts is measured using a PHM240 MeterLab pH-meter. A calibration curve of pH according to diacid/diamine ratio has been established before making a titration terephthalic acid with HMD with pH measurement for a mass concentration of 6T salt of 5%w at constant temperature of 20°C.

### Molar ratio by end-group titration:

The prepared salts samples are subjected to end-group titration measurements in order to determine their amine and carboxyl content. The amine and carboxyl content are determined by a return assay method using 1 mol/L HCl solutions and 1 mol/L soda solutions.

### Granulometry

The granulometry of the salts is determined using a laser granulometer Malvern by considering a spherical shape for the salt particles.

### Microscopy

Morphological characteristics of the salts are observed by SEM (scanning electron microscopy) with a Zeiss Gemini microscope. The samples are metallized with platinum and pictures are made at magnification 50 times, 200 times and 1000 times.

### Quality of the salts

The table 2 below combines the characteristics of the salt obtained for each essay in terms of yield, melting temperatures determined by DSC analysis, pH measured at 5 % mass of salt at 20°C, and molar diacid/diamine corresponding ratio obtained as described previously thanks to the calibration curve.

**TABLE 2**

| **Assay** | **Yield (%)** | **Melting point (°C)** | **pH** | **Molar ratio** |
|---|---|---|---|---|
| 1 | 72 | 284 | 7.224 | 1.0002 |
| 2 | 80 | 282 | 6.818 | 1.0010 |
| 3 | 91 | 282 | 6.329 | 1.0033 |
| 4 | 82 | 283 | 7.107 | 1.0003 |

DSC analysis performed on the dried salt powders show an endothermic peak at the theoretical melting temperature of the salt, thereby testifying the formation of the diacid/diamine salt. As a remark, a deformation of the endothermic peak and of the baseline may be observed due to the initiation of the polymerization reaction. That is why a single temperature rise may be done for one sample.

The molar diacid/diamine ratios correspond to stoichiometric salts. These have been also verified by dosing terminal groups (see Table 3 below), which leads to a good correlation with the values determined by pH measurement. As a remark, the determination of molar ratio by end-group titration is less accurate than the method by pH measurement.

**TABLE 3**

| **Assay** | **[COOH] (meq/kg)** | **[NH₂] (meq/kg)** | **Molar ratio (*via* terminal groups)** | **Molar ratio (*via* pH measurement)** |
|---|---|---|---|---|
| 1 | 7067 | 7045 | 0.996 | 1.0002 |
| 2 | 7024 | 7043 | 1.003 | 1.001 |
| 3 | 7052 | 7068 | 1.002 | 1.0033 |
| 4 | 6991 | 6960 | 0.997 | 1.0003 |

### Morphology of the salts

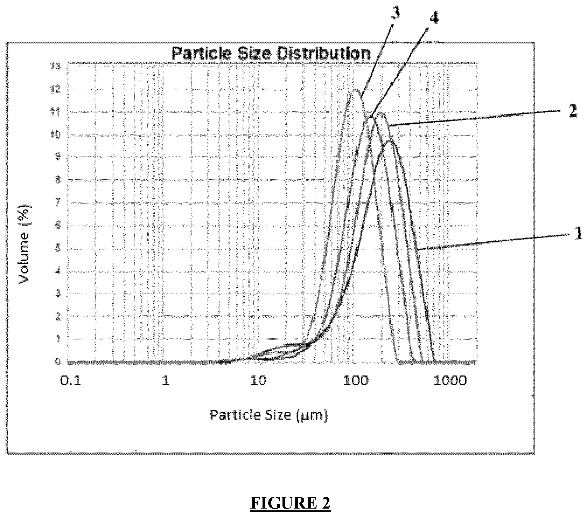

As show in the particle size distribution curves (Figure 2), the salts obtained by a salification process in accordance with the invention have a D50 particle size on the order of 100 µm.

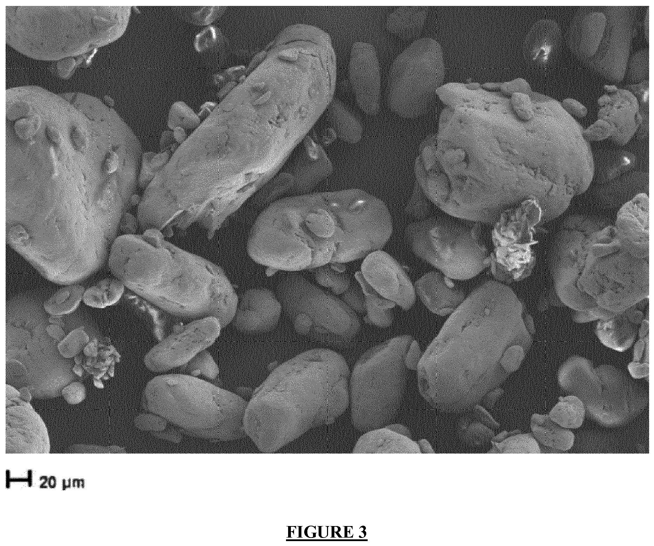

As shown on the SEM images (figure 3), crystals of rectangular shape are observed. The shape of solid particles is completely different to the initial shape of terephthalic acid, which underlines salification reaction between AT and HMD.

The 6T salts thus obtained in a form of a dry powder can be submitted to polycondensation in order to prepare poly(hexamethyleneterephthalamide), in particular by solid-state polymerization.

## Claims

1. A process for preparing a stoichiometric dicarboxylic acid/diamine salt having a solubility in water lower than or equal to 30 % mass at 50°C, by salification from at least one dicarboxylic acid and at least one diamine as monomers,
wherein the entire salification reaction occurs in a heterogeneous aqueous medium, in which the quantities of solubilized dicarboxylic acid and of solubilized diamine are maintained at a diacid/diamine molar ratio of 1 ± 0.1, preferably of 1 ± 0.01.

2. The process as claimed in claim 1, comprising:
(a) the addition of diamine to a suspension of dicarboxylic acid in an aqueous medium; or
(b) the simultaneous and separate additions of dicarboxylic acid and diamine in an aqueous medium;
wherein the addition rate of the diamine and, in case of (b), the addition rate of dicarboxylic acid is/are adjusted so that, at each moment of the salification reaction, the quantities of solubilized dicarboxylic acid and of solubilized diamine in the reaction medium are in a molar ratio of 1 ± 0.1, preferably of 1 ± 0.01.

3. The process as claimed in any one of the preceding claims, wherein the dicarboxylic acid is chosen from aliphatic dicarboxylic acids having at least 10 carbon atoms, aromatic dicarboxylic acids, and mixtures thereof; in particular chosen from adipic acid, sebacic acid, dodecanedioic acid, terephthalic acid, 2,6-naphthalene dicarboxylic acid, biphenyl-4,4'-dicarboxylic acid and mixtures thereof, preferably the dicarboxylic acid is terephthalic acid.

4. The process as claimed in any one of the preceding claims, wherein the diamine is chosen from linear or branched aliphatic C₆-C₁₂ diamines, in particular from hexamethylene diamine, octamethylene diamine, decamethylene diamine, dodecamethylene diamine, and mixtures thereof; preferably the diamine is hexamethylene diamine.

5. The process as claimed in any one of the preceding claims for preparing a dicarboxylic acid/diamine salt chosen in the group consisting of aliphatic salts having a total number of carbon atoms greater than or equal to 20, and semi-aromatic salts comprising in particular a linear or branched diamine having a total number of carbon atoms greater than or equal to 6, especially chosen from 10-10 salt, 12-12 salt, 10-12 salt, 6T salt, 10T salt and 12T salt, preferably a 6T salt.

6. The process as claimed in any one of the preceding claims, said process being carried out at a temperature below the temperature T* of the salt saturation point, in particular at a temperature lower than or equal to 100°C, especially lower than or equal to 70°C and more particularly lower than or equal to 50°C.

7. The process as claimed in any one of the preceding claims, wherein the nature of solvent(s) of said reaction aqueous medium is adjusted to control, in particular to enhance, the solubility of the dicarboxylic acid in the aqueous medium.

8. The process as claimed in any one of the preceding claims, wherein the aqueous reaction medium comprises water and optionally one or more co-solvents, in particular chosen from C₁-C₄-alcohols, such as ethanol, and more particularly in a water/cosolvent(s) volume ratio ranging from 100/0 to 10/90.

9. The process as claimed in any one of the preceding claims, comprising at least the steps consisting in:
(a-1) providing a suspension of dicarboxylic acid in an aqueous medium, said suspension comprising preferably more than 10 % mass, in particular more than 30 % mass, of dicarboxylic acid solid particles; and
(a-2) adding diamine to said suspension of dicarboxylic acid under conditions favorable to the formation of the dicarboxylic acid/diamine salt in solid particulate form;
wherein the reaction medium is kept under stirring during steps (a-1) and (a-2) and at a temperature lower than the temperature T* of the salt saturation point, in particular at a temperature lower than or equal to 70°C, and more particularly lower than or equal to 50°C;
and wherein the addition rate of diamine in step (a-2) is adjusted to the quantity of dicarboxylic acid solubilized in the suspension, in order to maintain at each moment of the salification reaction a molar ratio between the quantity of solubilized dicarboxylic acid and the quantity of solubilized diamine in the reaction medium of 1±0.1, preferably of 1±0.01.

10. The process as claimed in claim 9, wherein the diamine is added in step (a-2) in its pure liquid form or in the form of an aqueous solution by dilution in one or more solvents, especially in the solvent(s) used in the aqueous suspension of dicarboxylic acid of step (a-1).

11. The process as claimed in any one of claims 1 to 8, comprising at least the steps consisting in:
(b-1) providing an aqueous medium, in particular as defined in claim 10 or 11; and
(b-2) adding to said aqueous medium, separately and simultaneously, the diamine and dicarboxylic acid,
wherein the reaction medium is kept under stirring during step (b-2) and at a temperature lower than the temperature T* of the salt saturation point, in particular at a temperature lower than or equal to 70°C and more particularly lower than or equal to 50°C;
and wherein the addition rates of diamine and dicarboxylic acid in step (b-2) are adjusted to maintain, at each moment of the salification reaction, a molar ratio between the quantities of solubilized dicarboxylic acid and of solubilized diamine in the reaction medium of 1±0.1, preferably of 1±0.01.

12. The process as claimed in the preceding claim, wherein the addition rate of dicarboxylic acid is adjusted to maintain a quantity of non-reacted dicarboxylic acid solid particles in the reaction medium strictly lower than 20 % mass, preferably strictly lower than 10 % mass.

13. The process as claimed in claim 11 or 12, wherein the dicarboxylic acid is added in step (b-2) in a powder form or in the form of a suspension in one or more aqueous solvent(s), especially in the solvent(s) used for the aqueous medium of step (b-1) and/or diamine is added in step (b-2) in its pure liquid form or in the form of an aqueous solution by dilution in one or more solvents, especially in the solvent(s) used for the aqueous medium of step (b-1).

14. The process as claimed in any one of the preceding claims, wherein the progress of the salification reaction is monitored by pH measurement in the reaction medium, in particular to identify the end of the reaction through pH rise which marks out stoichiometric point of the salt.

15. A process for preparing a polyamide, comprising at least the steps of:
(i) preparing a stoichiometric dicarboxylic acid/diamine salt according to a slurry-type process as claimed in any one of claims 1 to 14; and
(ii) polymerizing said dicarboxylic acid/diamine salt under conditions favorable to achieve the desired polyamide.

16. The process as claimed in the preceding claim, for preparing a polyamide chosen from poly(hexamethyleneterephthalamide) (PA 6T), poly(decametyleneterephthalamide) (PA 10T) and poly(decamethylene sebacamide) (PA 10-10).
